Europäisches Patentamt

European Patent Office

Office européen des brevets

(11) Numéro de publication: **0 293 730 B1**

# FASCICULE DE BREVET EUROPEEN

(45) Date de publication de fascicule du brevet: **29.07.92**  (51) Int. Cl.5: **G21F 9/08**

(21) Numéro de dépôt: **88108315.8**

(22) Date de dépôt: **25.05.88**

(54) **Procédé et dispositif de purification d'un gaz contenant des isotopes d'hydrogène.**

(30) Priorité: **27.05.87 LU 86902**

(43) Date de publication de la demande:
**07.12.88 Bulletin 88/49**

(45) Mention de la délivrance du brevet:
**29.07.92 Bulletin 92/31**

(84) Etats contractants désignés:
**BE DE ES FR GB GR IT LU NL**

(56) Documents cités:
**EP-A- 0 189 607**
**GB-A- 908 069**

**CHEMICAL ABSTRACTS, vol. 100, 1984, page 466, résumé no. 110771t, Columbus, Ohio, US; & JP-A-58 144 796 (MITSUBISHI ATOMIC POWER INDUSTRIES INC.) 29-08-1983**

(73) Titulaire: **COMMUNAUTE EUROPEENNE DE L'ENERGIE ATOMIOUE (EURATOM)**
**Bâtiment Jean Monnet-DG XIII/A1 Plateau du Kirchberg**
**L-2920 Luxembourg(LU)**

(72) Inventeur: **Pierini, Giancarlo**
**Via Campigli 19**
**Varese(IT)**
Inventeur: **Dworschak, Heinz**
**Via Mentana 2**
**I-21023 Cardana di Besozzo(IT)**
Inventeur: **Spelta, Bruno**
**Via Cernuschi 31**
**Varese(IT)**
Inventeur: **Vansant, Etienne**
**Manderleylaan 2**
**B-2640 Zoersel(BE)**

(74) Mandataire: **Weinmiller, Jürgen**
**Lennéstrasse 9 Postfach 24**
**W-8133 Feldafing(DE)**

## Description

L'invention concerne un procédé de purification d'un gaz contenant des isotopes d'hydrogène et de récupération des différents isotopes, en particulier pour le traitement d'un gaz sortant d'un réacteur à fusion thermonucléaire.

On sait qu'un réacteur à fusion produit non seulement de l'hélium et de l'énergie à partir d'une fusion du deutérium (D) et du tritium (T), mais également certaines impuretés résultant notamment de la réaction du plasma avec la première paroi ou un autre composant du réacteur. Il faut donc extraire régulièrement ce gaz du plasma et le purifier. On peut s'attendre à une contamination du combustible de fusion par un grand nombre d'impuretés, en particulier pour de l'eau légère, lourde ou tritiée, par des composés sulfurés tels que $SO$, $SO_2$, $(H,D,T)_2S$, par des hydrocarbures tritiés tels que $C_n(H,D,T)_{2n+m}$, principalement méthane, ainsi que par $N_2$, $O_2$, $CO$, $CO_2$.

Les procédes de purification conçus jusqu'ici et décrits par exemple dans le rapport "Los Alamos 6855-P" par J.L. Anderson et R.H. Sherman, juin 1977, intitulé "Tritium system test assembly", sont extrêmement compliqués et chers et nécessitent dans certains systèmes une élevation de la température du gaz contenant du tritium à des valeurs telles que le tritium tend à migrer dans des métaux de l'appareillage et à les traverser grâce à sa force de perméation.

L'invention a pour but de proposer un procédé plus simple ne nécessitant pas des températures élevées pour les gaz tritiés et conduisant à un dispositif simple et compact, ce qui est fortement souhaitable pour des raisons de sécurité et d'inventaire de matériaux radioactifs. Il en résulte aussi qu'un simple système de confinement dynamique, petit et peu coûteux, est requis pour les conditions de purification normale et de secours, à cause de la place limitée nécessaire pour l'opération. Ceci réduit considérablement le coût d'investissement, d'extraction et de traitement de plasma.

Selon l'invention, ce but est atteint par le fait que le gaz est d'abord séché dans un étage d'adsorption de l'eau, que le gaz séché traverse alors un étage d'adsorption sélective de composés du soufre et qu'enfin le gaz sortant de cet étage, qui contient au moins quelques-uns des composés $(H,D,T)_2$, $N_2$, $O_2$, $CO$, $C-(H,D,T)_4$, est traité dans un étage d'adsorption/séparation d'hydrogène à zéolite.

De préférence, l'eau adsorbée dans l'étage d'adsorption de l'eau est divisée en oxygène $O_2$ d'une part et hydrogène et ses isotopes d'autre part, ces derniers étant alors traités dans un étage d'adsorption/séparation d'hydrogène à zéolite.

Il est utile de faire fonctionner les différents étages à deux cycles, à savoir un cycle d'adsorption suivi d'un cycle de régénération, pendant lequel les produits adsorbés sont libérés.

L'invention a également pour objet un dispositif de purification d'un gaz contenant des isotopes d'hydrogène pour la mise en oeuvre du procédé mentionné ci-dessus, et qui est caractérisé en ce que dans chaque étage il y a au moins deux unités identiques, dont l'une est en cycle d'adsorption pendant que l'autre est régénérée, et vice-versa. Ceci permet une purification en continu.

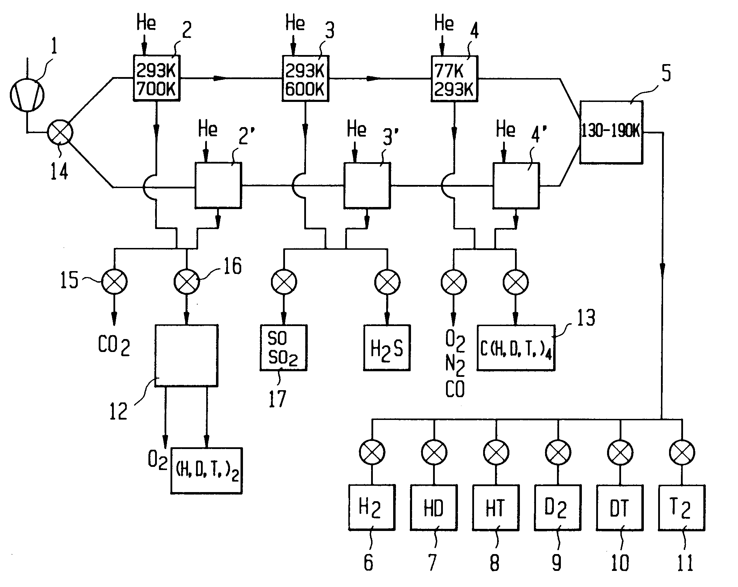

L'invention sera décrite ci-après plus en détail à l'aide d'un exemple préféré de réalisation et de la figure unique ci-jointe.

La figure unique montre schématiquement l'ensemble du dispositif de purification selon l'invention.

Cet exemple de réalisation a été conçu en tenant compte d'un réacteur à fusion des caractéristiques suivantes:

```
puissance maximale de fusion          747 MW(th)
rapport activité/inactivité             0,8
inventaire combustible               3041 gd⁻¹ (25,3 mol/h)
quantité de tritium expulsé          1733 gd⁻¹ }
                                                } (24 mol/h)
quantité de deutérium expulsé        1156 gd⁻¹ }
```

Le tableau I ci-après indique à la première colonne la composition des gaz à purifier pour le cas d'un réacteur de taille spécifiée ci-dessus. Aucun réacteur à fusion n'existant aujourd'hui, cette composition provient d'un calcul théorique qui peut faire l'objet d'une modification, sans pour autant mettre en cause la structure du dispositif selon l'invention.

A la colonne 2, la quantité des différents composants en litres par heure, et à la colonne 3, la radioactivité des différents composants sont affichées.

Le mélange gazeux composé d'isotopes d'hydrogène, de l'hélium et d'impuretés provenant du réacteur à fusion est injecté par une pompe dosimétrique 1 dans un étage 2 d'adsorption de l'eau et du $CO_2$, qui adsorbe pratiquement la totalité de la vapeur d'eau, d'eau lourde, d'eau tritiée, la quantitié totale du $CO_2$ et des traces de CO. La température d'adsorption est maintenue constante à la température ambiante. La quatrième colonne du tableau I ci-dessous indique la composition des gaz après passage du premier étage 2. Le restant du mélange est alors envoyé vers un étage 3 d'adsorption sélective de composés de soufre, où des composés tels que SO, $SO_2$, $H_2S$ sont sélectivement extraits à température ambiante par une zéolite, principalement imprégnée par de la monoéthanolamine et de la diéthanolamine (voir par exemple le document EP-A-85200128.8). Ce substrat peut être remplacé par une zéolite préconditionnée du type A, Y ou Z, dans laquelle les cations sont échangés avec $Ca^{2+}$, $Mg^{2+}$, $Fe^{3+}$; une telle zéolite est aussi effective comme absorbant des composés du soufre et des traces éventuelles de $CO_2$ non encore adsorbé dans la colonne précédente. La dernière colonne du tableau montre la composition du gaz présent à la sortie de l'étage 3. On voit que les composés du soufre ont pratiquement disparus.

## TABLEAU I

| (1) Composés | (2) Etat initial | (3) | (4) | (5) |
|---|---|---|---|---|
| | quantité l.h$^{-1}$ | activité Ci.h$^{-1}$ | quantité après étage 2 l.h$^{-1}$ | quantité après étage 3 l.h$^{-1}$ |
| D - H | 578 | 155 | 578 | 578 |
| H | 14,45 | --- | 14,45 | 14,45 |
| $(H,D,T)_2O$ | 9,6 | 0,61 | $< 9,5.10^{-6}$ | --- |
| $C(H,D,T)_4$ | 0,64 | 0,078 | 0,64 | 0,64 |
| $(H,D,T)_2S$ | 0,064 | $7,8.10^{-3}$ | 0,064 | --- |
| SO, $SO_2$ | 0,96 | --- | 0,96 | --- |
| $N_2$, $O_2$ | 6,4 | --- | 6,4 | 6,4 |
| CO | 0,64 | --- | 0,64 | 0,64 |
| $CO_2$ | 0,064 | --- | 0,064 | --- |
| $^4He$ | 29 | --- | $>> 29$ | $>> 29$ |

Le restant des gaz, qui contient notamment de l'hélium, les isotopes d'hydrogène, $N_2$, $O_2$, CO, $C(H,D,T)_4$, est alors envoyé à un étage 4 d'adsorption/séparation de l'hydrogène à zéolite, où tous ces composés sauf l'hélium sont complètement adsorbés à la température de l'azote liquide (77K). La matériau utilisé est une zéolite du type mordenite structurellement modifiée (voir par exemple le document EP-A-0 049 936), capable d'adsorber les six espèces isotopomériques de l'hydrogène ($H_2$, HD, HT, $D_2$, DT, $T_2$) (voir EP-A-0 189 607), et revêtu d'alumine ou d'argile de 5 à 50% en poids pour en augmenter les propriétés mécaniques.

Le meilleur substrat est le (Ca,Na)-mordenite avec 70% de Ca, qui a été préconditionné thermiquement entre 420 et 480°C pendant 48 heures après une montée en température à une vitesse de 2°C par minute.

Dans le tableau II ci-après, on affiche les valeurs du facteur de résolution ($R_F$), du facteur de séparation ($S_F$) et des temps de retention du $H_2$ et du $D_2$ ($TH_2$, $TD_2$) pour une performance optimale de la colonne basée sur soit du Na-Mordenite, soit dudit (Ca,Na)-mordenite. Le débit de gaz porteur (He) est de 40 $cm^3min^{-1}$.

TABLEAU II

| Zéolite | Temp. (°C) | $TH_2$ (min) | $TD_2$ (min) | $S_F$ | $R_F$ |
|---|---|---|---|---|---|
| Na-Mordenite | 155 | 3,2 | 3,7 | 1,16 | 1,8 |
| Na-Mordenite | 140 | 4,6 | 5,5 | 1,19 | 2,0 |
| (Ca,Na)-Mord. | 55 | 3,8 | 4,6 | 1,22 | 2,6 |
| (Ca,Na)-Mord. | 40 | 6,5 | 8,5 | 1,30 | 3,3 |

L'adsorption est poursuivie jusqu'à un taux de saturation limite d'environ 80% de la valeur d'adsorption totale. Pendant cette adsorption, une première distribution des espèces s'effectue dans cet étage. Ensuite, on chauffe la zéolite de l'étage 4 à une température entre 150 et 170 K, suivant le type de zéolite utilisée. Les isotopes d'hydrogène sont alors séparés des autres impuretés, qui restent bloquées dans la zéolite à ces températures.

La séparation préliminaire des isotopes d'hydrogène produite par la technique de déplacement est complétée dans un étage 5 de structure identique à celle de l'étage 4, mais qui est toujours maintenue à une température constante entre 130 et 190 K, de préférence inférieure à 160 K. Cet étage fonctionne par la technique de chromatographie en phase gazeuse. Une nette séparation des six espèces isotopiques est obtenue en peu de temps. Une très bonne séparation est atteinte même quand le degré de saturation dans l'étage 4 arrive à 80% de la valeur maximale. Cette valeur peut être modifiée en fonction de la composition des espèces isotopiques d'hydrogène, et du degré de saturation requis.

La régénération des zéolites peut être effectuée chaque fois qu'elles atteignent une certaine valeur de saturation, de façon à récupérer les composants tritiés et non tritiés adsorbés. C'est le cas de l'eau tritiée et du $CO_2$ pour l'étage 2, des composés sulfurés pour l'étage 3, de $O_2$, $N_2$, CO et $C_n(H,D,T)_{2n+m}$ pour l'étage 4. Des vannes telles que 15, 16 dirigent les produits sélectivement soit vers une cheminée, soit vers des pièges ou récipients tels que 17.

En identifiant les isotopes à la sortie de l'étage 5 dans des détecteurs de masse et de radioactivité, les différents isotopes peuvent être guidés successivement et dans l'ordre suivant vers un piège 6 pour l'hydrogène $H_2$, un piège 7 pour le composé H-D, un piège 8 pour le composé H-T, un piège 9 pour le deutérium, un piège 10 pour le composé D-T et un piège 11 pour le tritium. Ces pièges sont des pièges d'adsorption du type "getter".

Pendant cette opération, les autres impuretés restent fixées dans la zéolite de l'étage 4, mais si l'on rechauffe alors cette zéolite à la température ambiante, ces impuretés sont libérées une à une. Cette libération peut être accélérée en balayant la zéolite par de l'hélium.

Tous les composés non tritiés tels que $O_2$, $N_2$, CO, $CO_2$, peuvent être rejetés, alors que les hydrocarbones tritiés $C_n(H,D,T)_{2n+m}$, principalement du méthane, sont dirigés vers un piège de méthane 13, qui est constitué d'un lit d'adsorption métallique chauffé à 600 K, une température à laquelle les composés hydrocarboniques sont décomposés. Pour régénérer ce lit, on le chauffe à 1000 K pour récupérer les isotopes d'hydrogène. La durée d'un cycle total d'adsorption-désorption-séparation nécessite environ une heure. Dans ce cas, deux unités 2, 3, 4 et 2', 3', 4' peuvent être mis en parallèle pour un fonctionnement alternatif à travers une vanne 14.

L'eau adsorbée dans l'étage 2 peut être expulsée de cet étage pendant un cycle de régénération en le chauffant à 700 K et en le balayant par un flux d'hélium. L'eau ainsi libérée est divisée en oxygène d'une part et en des isotopes d'hydrogène d'autre part dans un étage de séparation à fonctionnement chimique ou électrochimique 12, l'oxygène pouvant être dégagé et les isotopes d'hydrogène devant être fractionnés soit dans l'étage 4, soit dans un étage à part similaire.

L'étage 2 est composé de deux pièges d'eau mis en série, le premier étant rempli d'une zéolite préconditionnée ne laissant passer qu'une trés faible quantité d'eau (inférieure à 5 ppm), le second étant rempli d'un silicate qui a été modifié par silane ou borane tel que décrit dans la demande de brevet européen 85200678.2. Le contenu en vapeur d'eau à la sortie de ce piège est inférieur à 0,5 ppm.

Les dimensions de chaque étage et le temps de fonctionnement avant régénération, ainsi que les temps nécessaires pour leur régénération ou pour la séparation chromatographique des gaz sont indiqués en tant qu'exemple dans le tableau III.

TABLEAU III

| Etage | Diamètre (cm) | Hauteur (cm) | Temps avant régénération (jours) | Temps de régénération (R) ou séparation (S) (min) | Remarques | Quantité de zéolite (g) |
|---|---|---|---|---|---|---|
| 2 | 10 | 100 | 3 | 120 (R) | régénération à 700 K dans débit d'He (2 colonnes utilisées) | 7000 |
| 3 | 10 | 100 | 20 | 15 (R) | régénération à 500 K dans débit d'He (2 colonnes utilisées) | 7000 |
| 4 | 5 | 200 | 1 | 15 (R + S) | régénération à 273-323 K dans débit d'He de 20 l/min (2 colonnes utilisées) | 3200 |
| 5 | 10.0 | 250 | / | 15 (S) | (2 colonnes utilisées) | 4000 |

EP 0 293 730 B1

L'invention n'est pas limitée à l'exemple de réalisation décrit ci-dessus. On peut appliquer le procédé selon l'invention à toute extraction de tritium dans un flux d'un gaz inerte tel que l'hélium ou d'un autre gaz.

**Revendications**

1. Procéde de purification d'un gaz contenant des isotopes d'hydrogène et de récupération des différents isotopes, en particulier pour le traitement d'un gaz sortant d'un réacteur à fusion thermonucléaire, caractérisé en ce que le gaz est d'abord séché dans un étage (2) d'adsorption de l'eau et de $CO_2$, que le gaz séché traverse alors un étage (3) d'adsorption sélective de composés du soufre et qu'enfin le gaz sortant de cet étage, qui contient au moins quelques-uns des composés $(H,D,T)_2$, $N_2$, $O_2$, CO, C-$(H,D,T)_4$, est traité dans un étage (4) d'adsorption/séparation d'hydrogène à zéolite.

2. Procéde selon la revendication 1, caractérisé en ce que l'eau adsorbée dans l'étage (2) d'adsorption de l'eau est divisée en oxygène $O_2$ d'une part et hydrogène et ses isotopes d'autre part, ces derniers étant alors traités dans un étage (4) d'adsorption/séparation d'hydrogène à zéolite.

3. Procédé selon l'une des revendications 1 à 2, caractérisé en ce qu au moins quelques-uns des étages fonctionnent à deux cycles, á savoir un cycle d'adsorption suivi d'un cycle de régénération, pendant lequel les produits adsorbés sont libérés.

4. Dispositif de purification d'un gaz contenant des isotopes d'hydrogène pour la mise en oeuvre du procédé selon la revendication 3, caractérisé en ce que dans chaque étage (2, 3, 4) il y a au moins deux unités identiques, dont l'une est en cycle d'adsorption pendant que l'autre est régénérée, et vice-versa.

**Claims**

1. A method for purifying a gas containing hydrogen isotopes, and for recovering the different isotopes, in particular for processing a gas coming from a thermonuclear fusion reactor, characterized in that firstly the gas is dried in a water adsorption stage (2), that the dried gas then passes through a stage (3) in which sulphur compounds are selectively adsorbed and that finally the gas leaving this stage, which still contains at least some of the compounds $(H,D,T)_2$, $N_2$, $O_2$, CO, $C(H,D,T)_4$, is processed in a hydrogen adsorption/separation stage (4) of the zeolite type.

2. A method according to claim 1, characterized in that the water adsorbed in the water adsorption stage (2) is then divided into oxygen $O_2$ on the one hand and hydrogen and its isotopes on the other hand, the latters being then processed in a hydrogen adsorption/separation stage (4) of the zeolite type.

3. A method according to any one of claims 1 to 2, characterized in that at least some of the stages are operated according to alternate cycles, i.e. an adsorption cycle followed by a regeneration cycle, during which the adsorbed products are set free.

4. A device for purifying a gas containing hydrogen isotopes this device implementing the method according to claim 3, characterized in that each stage (2, 3, 4) includes at least two identical units, one being in the adsorption cycle while the other is being regenerated and vice versa.

**Patentansprüche**

1. Verfahren zur Reinigung eines Wasserstoffisotope enthaltenden Gases und zur Wiedergewinnung der verschiedenen Isotope, insbesondere zur Behandlung eines von einem Kernfusionsreaktor kommenden Gases, dadurch gekennzeichnet, daß das Gas zuerst in einer Wasser und $CO_2$ adsorbierenden Stufe (2) getrocknet wird, daß das Gas dann eine Stufe (3) der selektiven Adsorption von Schwefelverbindungen durchquert und daß schließlich das aus dieser Stufe austretende Gas, das zumindest einige der Verbindungen $(H,D,T)_2$, $N_2$, $O_2$, CO, $C(H,D,T)_4$ enthält, in einer Zeolit-Stufe (4) behandelt wird, in der Wasserstoff adsorbiert und getrennt wird.

2. Verfahren nach Anspruch 1, dadurch gekennzeichnet, daß das in der Wasser-Adsorptionsstufe (2) adsorbierte Wasser in Sauerstoff $O_2$ einerseits und Wasserstoff und seine Isotope andererseits aufgeteilt wird, wobei diese letzteren dann in einer Zeolit-Stufe (4) behandelt werden, in der Wasserstoff adsorbiert und getrennt wird.

3. Verfahren nach einem der Ansprüche 1 bis 2, dadurch gekennzeichnet, daß mindestens einige der Stufen in zwei Zyklen arbeiten, d.h. einem Adsorptionszyklus gefolgt von einem Regenerationszyklus, während dessen die adsorbierten Produkte freigesetzt werden.

4. Vorrichtung zur Reinigung eines Wasserstoffisotope enthaltenden Gases zur Anwendung des Verfahrens nach Anspruch 3, dadurch gekennzeichnet, daß es in jeder Stufe (2, 3, 4) mindestens zwei identische Einheiten gibt, von denen sich die eine im Adsorptionszyklus befindet, während die andere gerade regeneriert wird, und umgekehrt.